# EUROPEAN PATENT SPECIFICATION

(11) **EP 1 821 561 B1**
(45) Date of publication and mention of the grant of the patent: **29.12.2010**
(21) Application number: 06290295.2
(22) Date of filing: 20.02.2006
(51) Int. Cl.: H04W 68/00

(54) **Method for transferring a paging request message for a mobile terminal**
Verfahren zum Weiterleiten einer Paging-Request Nachricht für ein mobiles Endgerät
Procédé pour transférer un message de requête de recherche pour un terminal mobile

(43) Date of publication of application: 22.08.2007
(73) Proprietor: Mitsubishi Electric R&D Centre Europe B.V., 1119 NS Schiphol Rijk (NL); MITSUBISHI DENKI KABUSHIKI KAISHA, Chiyoda-ku Tokyo 100-8310 (JP)
(72) Inventor: Voyer, Nicolas Mitsubishi Electric ITE, 35708 Rennes Cedex 7 (FR)
(74) Representative: Maillet, Alain

(56) References cited:
- WO-A-03/103325
- LIEBSCH G RENKER R SCHMITZ NEC NETWORK LABORATORIES EUROPE M: "Paging Concept for IP based Networks; draft-renker-paging-ipv6-01.txt;" IETF STANDARD-WORKING-DRAFT, INTERNET ENGINEERING TASK FORCE, IETF, CH, no. 1, September 2001 (2001-09), XP015034320 ISSN: 0000-0004
- RAMJEE R ET AL: "IP PAGING SERVICE FOR MOBILE HOSTS" WIRELESS NETWORKS, ACM, NEW YORK, NY, US, vol. 8, no. 5, September 2002 (2002-09), pages 427-441, XP001131425 ISSN: 1022-0038
- HO J S M ET AL: "History-based location tracking for personal communications networks" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18 May 1998 (1998-05-18), pages 244-248, XP010287776 ISBN: 0-7803-4320-4

## Description

The present invention relates to a method and device for transferring a paging request message for a mobile terminal of a wireless telecommunication network composed of at least a first node which has at least served the mobile terminal.

A wireless telecommunication network like a mobile telecommunication network, that provides telecommunication services to mobile terminals wandering inside of an area composed of multiple cells of the nodes of the wireless telecommunication network, typically offers means to the mobile telecommunication operator to determine any time which node is serving the mobile terminal in order to enable a communication session establishment with the mobile terminal.

Classically, when each of mobile terminal is in the idle mode, it has to continuously reselect the best cell in case a communication has to be established. Such procedure is the cell reselection procedure. Once a cell reselection procedure occurs, the mobile terminal informs the node that it has to serve the mobile terminal.

In order to enable the wireless operator to reach the mobile terminal, one solution consists in informing a centralizing device each time that a cell reselection occurs. The centralizing device in such case, as it manages an important number of nodes, has to process a huge number of messages in order to know which node is serving each mobile terminal. The centralized device needs then to have high processing capabilities in order to process, within a reasonable delay, such messages.

Once a mobile terminal selects a cell of a node, such node is considered as a node which serves the mobile terminal. A mobile terminal is served by a node, or in other words, a node serves a mobile terminal, if the mobile terminal can establish or receive or continue a communication through the node.

Another possibility consists in having a centralizing equipment which commands the broadcast in each cell of the nodes of a location area of a paging indication in order to know, from the response of the mobile terminal to the paging indication, which node is serving the mobile terminal. In such case, instead of executing a cell reselection each time it moves from its serving cell, the mobile terminal achieves a location area update procedure each time it moves from its serving location area, so as to get a new serving location area. Using the location area update procedure rather than a cell reselection procedure, the number of exchanged messages is reduced. On the other hand, the centralizing equipment has to command the broadcast in each cell of the nodes of the location area of the paging message. Such broadcast consumes a non negligible part of the resources of the wireless telecommunication network and the processing of such command by the centralizing equipment also consumes a non negligible part of the processing resources of the centralizing equipment.

Typically, the location area needs to be large enough in order to enable the location of the mobile terminal with a certain probability of success and needs, on the opposite side, to have a reduced size in order to save the resources of the wireless telecommunication network and the processing resource of the centralized equipment.

The definition of a location area is a difficult problem and is many times not satisfactory.

The patent application WO 03/103325 discloses a system wherein when a paging occurs to mobile station, the Mobile-services Switching Center sends a CS paging request to the base station controller. The serving (previous) base station controller will, upon reception of the paging from Mobile-services Switching Center, send the paging request to Base Transceiver Stations.

The IETF draft of September 2001 entitled "Paging Concept for IP based Networks; draft-renker-paging IPV6-01.txt" discloses a paging agent and an access router. The paging agent uses a Routing Header, whose last destination is the home address of the mobile.

The paper of Ramjee et all entitled "IP paging for mobile hosts" published in wireless networks, ACM, NEW York, vol 8, no 5 September 2002 pages 427 to 441 discloses foreign agents. Paging is initiated from the mobile host's last attached foreign agent. The foreign agent contacts the base stations in the paging area, the base stations subsequently page over the air.

The aim of the invention is therefore to propose a method and a device which make it possible to avoid that the wireless telecommunication network has centralizing devices with high processing capabilities and/or which doesn't uses any location area as the one proposed in the state of the art.

To that end, the present invention concerns a method for transferring a paging request message for a mobile terminal of a wireless telecommunication network composed of at least a first node which has at least managed a cell (15a) selected by the mobile terminal, the first node transferring signals in the cell of the wireless telecommunication network through a wireless interface of the first node, **characterised in that** the method comprises the steps executed by the first node of:
- receiving a paging request message for the mobile terminal,
- checking if a paging routing path which is associated to the mobile terminal comprises an identifier of a second node which manages a cell which has at least been selected by the mobile terminal after the cell of the first node, the paging routing path comprising at least the identifier of a node which manages a cell previously selected by the mobile terminal if there is one and may comprise the identifier of a second node which manages a cell which has been selected by the mobile terminal after the cell of the first node,
- transferring a paging indication in the cell managed by the first node if there is no identifier of the second node in the paging routing path,
- transferring the paging request message to the second node if there is an identifier of the second node in the paging routing path.

The present invention concerns also a device for transferring a paging request message for a mobile terminal of a wireless telecommunication network composed of at least a first node which has at least managed a cell selected by the mobile terminal, the first node transferring signals in the cell of the wireless telecommunication network through a wireless interface of the first node, **characterised in that** the device is included in the first node and comprises :
- means for receiving a paging request message for the mobile terminal,
- means for checking if a paging routing path which is associated to the mobile terminal comprises an identifier of a second node which manages a cell which has at least been selected by the mobile terminal after the cell managed by the first node, the paging routing path comprising at least the identifier of a node which manages a cell previously selected by the mobile terminal if there is one and may comprise the identifier of a second node which manages a cell which has been selected by the mobile terminal after the cell of the first node,
- means for transferring a paging indication in the cell managed by the first node if there is no identifier of the second node in the paging routing path,
- means for transferring the paging request message to the second node if there is an identifier of the second node in the paging routing path.

Thus, the first node, being aware if the cell it manages is currently selected by the mobile terminal, can determine if a paging indication has to be transferred in the cell it manages and then the resources of its cell are used efficiently.

Furthermore, as the first node transfers the paging request message to the second node if there is an identifier of the second node in the paging routing path, it is no more necessary to broadcast a paging request message to plural nodes.

According to a particular feature, once the paging indication is transferred in the cell of the first node, the first node :
- receives a message from the mobile terminal,
- transfers an information message to a centralizing device of the wireless telecommunication network informing the centralizing device that the first node is serving the mobile terminal,
- reads an identifier of a third node comprised in the paging routing path associated to the mobile terminal, the third node being a node which manages a cell which has been previously selected by the mobile terminal,
- transfers to the third node a path deletion message,
- deletes the identifier of the third node from the paging routing path associated to the mobile terminal.

Thus the centralizing device can keep track of the location of the mobile terminal and associates the mobile terminal to the first node.

Furthermore, the first node transfers a message to the centralizing device only when it is needed. The centralizing device doesn't need to have high processing power. The centralizing device knows precisely which node is serving the mobile terminal only when it is needed, i.e. when a communication involving the mobile terminal has to be established.

Furthermore, as the first node transfers to the third node a path deletion message and deletes the identifier of the third node from the paging routing path associated to the mobile terminal, the memory resources of the nodes are managed efficiently.

According to a particular feature, once the paging request message is transferred to the second node, the first node deletes the paging routing path associated to the mobile terminal.

Thus, the memory resources of the first node are managed efficiently.

According to a particular feature, the paging request message is received by the first node from a third node, the third node being a node which manages a cell which has been previously selected by the mobile terminal, and once a paging indication is transferred in the cell, the first node transfers an information message to the centralizing device of the wireless telecommunication network informing the centralizing device that the first node is serving the mobile terminal.

Thus, the first node informs as soon as possible the centralizing device in order to inform the centralizing device of the exact location of the mobile terminal. The centralizing device can then associate the first node to the mobile terminal.

Furthermore, at the time of transferring a paging request message to each node which has managed a cell selected by the mobile terminal from the oldest one to the most recent one, the centralizing device needs only to know the oldest node. The intermediates nodes don't need to be known by the centralizing device. In addition, as the centralizing device needs to send a paging request message to only one node, the processing resources of the centralized equipment are thus minimised.

According to a particular feature, the first node receives a path deletion message from the second node and deletes the paging routing path associated to the mobile terminal.

Thus, the memory resources of the first node are managed efficiently. The first node doesn't have to handle anymore the paging routing path associated to the mobile terminal as the centralizing device has newly associated a node to the mobile terminal.

According to a particular feature, the identifier of the third node is comprised in the paging routing path associated to the mobile terminal and the first node transfers to the third node the path deletion message.

Thus, the memory resources of the third nodes are managed efficiently. The third node, as the centralizing device has newly associated a node to the mobile terminal, doesn't have to handle anymore the paging routing path associated to the mobile terminal. For further paging process, the centralizing device will transfer paging messages to the newly associated node.

According to a particular feature, when the first node which manages a cell which is selected by the mobile terminal, the first node transfers to the third node, a message comprising at least the identifier of the first node first node and receives, from the third node, a confirmation message.

Thus, the third node is informed that it no longer serves the mobile terminal.

According to a particular feature, the confirmation message comprises an information which is representative of the rank of the third node in the list of subsequent nodes which manage respectively a cell previously selected by the mobile terminal from the last transfer of the information message to the centralizing device.

Thus, it is possible to monitor how many nodes have served the mobile terminal from the last transfer of the information message to the centralizing device.

According to a particular feature, at the reception of a confirmation message, the first node :
- increments the information which is representative of the rank of the node,
- checks if the information which is representative of the rank of the node is upper than a predetermined value,
and if the information which is representative of the rank of the node is upper than a predetermined value :
- transfers the information message to the centralizing device of the wireless telecommunication network informing the centralizing device that the first node is serving the mobile terminal,
- sets the information is representative of the rank of the node to another predetermined value,
- transfers the path deletion message to the third node.

Thus, it is possible to avoid that too many nodes manage a cell selected by the mobile terminal from the last transfer of the information message to the centralizing device. The memory resources of the nodes are managed efficiently, and the latency to reach the mobile terminal at the time of a paging request command from the centralized device can be limited.

According to a particular feature, the first node :
- receives a cell update message from another mobile terminal,
- creates a paging routing path associated to the other mobile terminal,
- transfers an information message to the centralizing device of the wireless telecommunication network informing the centralizing device that the first node is serving the mobile terminal.

Thus, when a mobile terminal is powered on in a cell managed by the first telecommunication device, the centralizing device is informed about the location of the mobile terminal.

According to a particular feature, when the cell update message is received from the other mobile terminal the first node checks if a paging routing path already exists for the other mobile terminal and transfers a path deletion message to the second node if a paging routing path already exists for the other mobile terminal.

When a paging routing path exists already for the other mobile terminal, it means that there is a loop among the paging routing paths memorised in each node.

Thus, it is possible to reduce the latency of the paging request message transfer by shortening the size of the list of subsequent nodes which have served the mobile terminal from the last transfer of the information message to the centralizing device, when this list contains a loop. The nodes initially contained in that loop don't have to maintain the paging routing path. The memory resources of the nodes are also managed efficiently.

According to a particular feature, the first node transfers a paging indication in the cell managed by the first node if there is an identifier of the second node in the paging routing path.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 is a diagram representing the architecture of a mobile telecommunication network according to the present invention ;
Fig. 2 is a block diagram of a node according to the present invention ;
Figs. 3a, 3b and 3c represent an algorithm executed by a node according to the present invention.

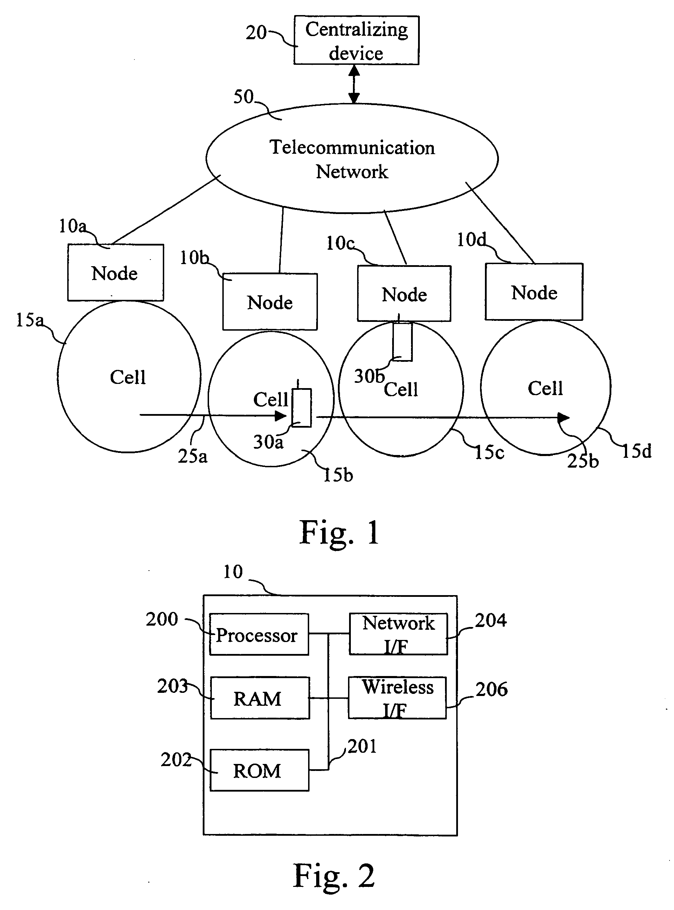

**Fig. 1** is a diagram representing the architecture of a mobile telecommunication network according to the present invention.

In the mobile telecommunication network, a centralizing device 20 is connected to a plurality of nodes 10a to 10d through a telecommunication network 50. The telecommunication network 50 is, as example and in a non limitative way, a dedicated wired network, a public network like a public switched network, an IP based network, a wireless network, an Asynchronous Transfer Mode network or a combination of above cited networks.

The telecommunication network 50 connects the nodes 10 together and enables the transfer of messages between the nodes 10 or between the nodes 10 and the centralizing device 20 according to the present invention.

The centralizing device 20 stores a context for each mobile terminal 30 of the mobile telecommunication network and when a node 10 informs the centralizing device 20 of an establishment of a communication session between a mobile terminal 30 and a remote telecommunication device not shown in the Fig. 1, the centralizing device 20 transfers the context of the mobile terminal 30 to the node 10 which sent the message through the telecommunication network 50.

The context of a mobile terminal 30 comprises, as example and in a non limitative way, the public key of the mobile terminal 30 in asymmetric encryption/authentication systems, the secret encryption/decryption key in symmetric flow encryption systems, the quality of service information, defining the flow of communication, in terms of average and peak data rates, the granularity, the time/latency constraints for the communication context of the mobile terminal 30, the reference of entry port of the network interface which has to be used for routing the communication from/to the mobile terminal 30 to the telecommunication network 50.

Such context is used to setup the wireless interface and the network interface of the node 10 which sent the message in order to enable the establishment of the communication session between the mobile terminal 30 and the remote telecommunication device. The node 10 has to setup both wireless interface and the network interface. For instance, the node 10 decides on which frequency /time slot /code it should operate, which can noticeably depend on the quality of service parameters, such as the average peak rate, to provide to the mobile terminal 30. The node 10 also checks the availability of hardware and software resources, at both wireless and network interfaces, and setup a connection between hardware and software resources.

Once set up, the wireless interface is ready to synchronise with the mobile terminal 30, and the step up of a communication is completed once the mobile terminal 30, informed of the wireless interface configuration, accomplishes the synchronisation on the wireless interface.

According to the invention, the centralizing device 20 maintains a location table which assigns to each mobile terminal 30 a node which is supposed to serve the mobile terminal 30.

Each node 10 is able to transfer and or receive data through a wireless area 15. Such wireless area will be called hereinafter a cell 15.

In the Fig. 1, only one centralizing device 20 is shown, but we can understand that a more important number of centralizing devices 20 can be used in the present invention. On a similar way, only four nodes 10a to 10d and their respective cells 15a to 15d are shown, but we can understand that a more important number of nodes 10 and cells 15 are used in the present invention.

In the Fig. 1, only two mobile terminals 30a and 30b are shown but we can understand that a more important number of mobile terminals 30 can be used in the present invention.

According to the Fig. 1, the mobile terminal 30a was currently served by the node 10a. The displacement of the mobile terminal 30a is depicted in the Fig. 1 by the arrows noted 25a and 25b. The terminal 30a is currently served by the node 10b and moves from the cell 15b of the node 10b to the cell 15d of the node 10d through the cell 15c of the node 10c.

Each time the mobile terminal 30a, which is in idle mode, moves from one cell 15 to another cell 15, a cell reselection procedure occurs. The mobile terminal 30a is in an idle mode when it is not in communication with another telecommunication device. When a mobile terminal 30 is in the idle mode, it has to continuously reselect the best cell 15 in case a communication has to be established. When a cell reselection procedure occurs, the mobile terminal 30a sends a cell update message comprising the identifier of the mobile terminal 30, information identifying the newly selected cell 15 and, according to the present invention, information identifying the previously selected cell 15.. The information identifying a cell 15 is the identifier of that cell 15 and/or the identifier of the node 10 which manages that cell 15.

Such message is at least received by the node 10 which manages the newly selected cell 15. Such procedure is called the cell reselection procedure.

According to the Fig. 1, the mobile terminal 30b is located within the cell 15c of the node 10c and is not moving.

The node 10 which manages the cell 15 that is selected by the mobile terminal 30, creates and maintains a paging routing path which is associated to the mobile terminal 30. The paging routing path comprises the identifier of the node 10 which manages the cell 15 previously selected by the mobile terminal 30 if there is one, the identifier of another node 10 which manages another cell 15 which was selected by the mobile terminal 30 when the mobile terminal 30 has executed a cell reselection procedure from the cell 15 of the node 10 to the other cell of the other node if there is one. The paging routing path comprises a variable C which is representative of the rank of the node 10 in the list of nodes 10 which managed a cell selected by the mobile terminal 30 from the last transfer of a message to the centralizing device 20 informing it that a node 10 was managing a cell selected by the mobile terminal 30.

When the mobile terminal 30 detects a paging indication broadcasted in the cell 15 it has selected, the mobile terminal 30 becomes aware that there is an incoming call from the wireless telecommunication network. The mobile terminal 30 triggers the establishment of a communication.

According to the invention, the paging indication is broadcasted in a cell 15 controlled by a node 10, when the node 10 receives a paging request message from either the centralizing device 20 or from another node 10, and if the node 10 determines that its cell is currently selected by the corresponding mobile terminal 30.

More precisely, the node 10 determines that its cell 15 is currently selected by the corresponding mobile terminal 30 by checking if there is in the paging routing path corresponding to the mobile terminal 30, an identifier of another node 10 which manages another cell 15 which was selected when the mobile terminal 30 executed a cell reselection procedure from the cell 15 of the node 10 to the other cell of the other node.

**Fig. 2** is a block diagram of a node according to the present invention.

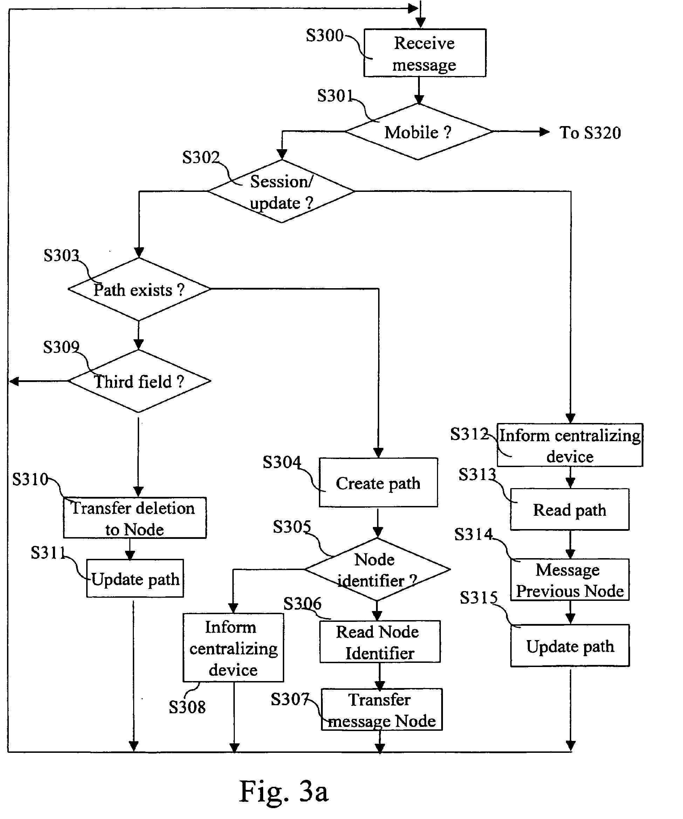

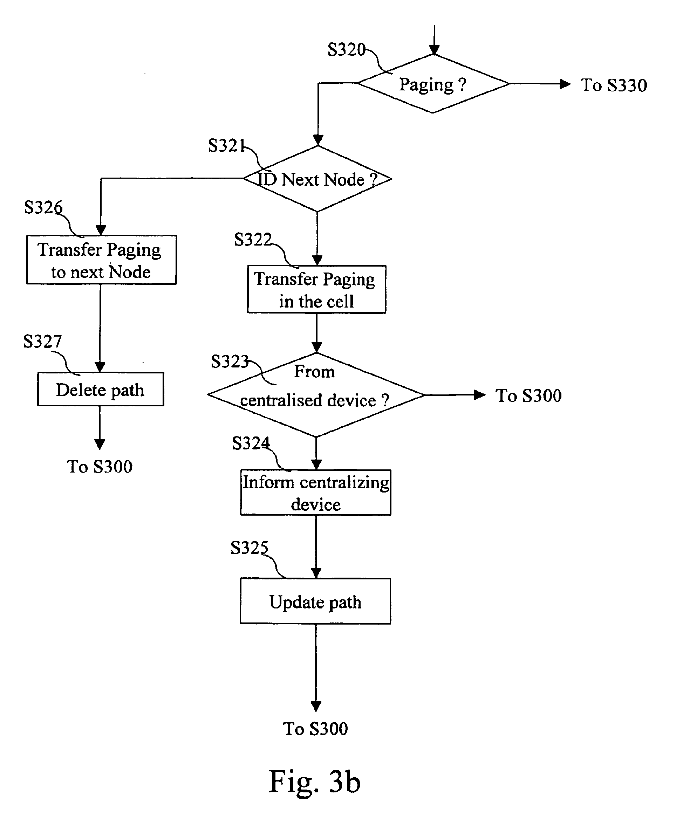

The node 10 has, for example, an architecture based on components connected together by a bus 201 and a processor 200 controlled by the program as disclosed in the Figs. 3a and 3b.

The bus 201 links the processor 200 to a read only memory ROM 202, a random access memory RAM 203, a network interface 204 and a wireless interface 206.

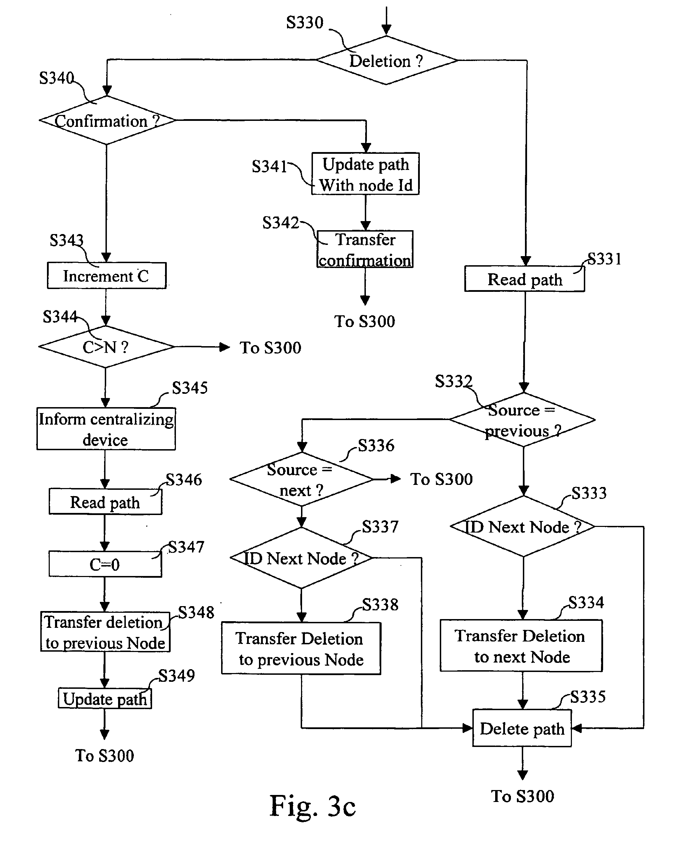

The memory 203 contains registers intended to receive variables, each paging routing path of the mobile terminals 30 which have selected a cell managed by the node 10, the content of the messages transferred by mobile terminals 30 or by other nodes 10 or by the centralizing device 20, the context of the mobile terminals 30, the mapping between the identifiers of each cell 15 managed by a neighbour node 10, the identifier of that neighbour node 10 and the instructions of the program related to the algorithm as disclosed in the Figs. 3a, 3b and 3c.

The processor 200 controls the operation of the network interface 204 and the wireless interface 206.

The read only memory 202, contains instructions of the programs related to the algorithm as disclosed in the Figs. 3a, 3b and 3c, which are transferred, when the node 10 is powered on to the random access memory 203.

The node 10 is connected to the telecommunication network 50 through the network interface 204. As example, the network interface 204 is a DSL (Digital Subscriber Line) modem, an ISDN (Integrated Services Digital Network) interface, or a GbE (Giga Bit Ethernet) interface, etc. Through such interface, the node 10 exchanges information which the centralizing device 20 and the other nodes 10 of the wireless cellular telecommunication network. The communications established or received by the mobile terminals 30 comprised in the cell 15 of the node 10 go through the network interface 204 and the wireless interface 206.

Through the wireless interface 206, the node 10 receives from a mobile terminal 30 which expects to be served by the node 10, at least the identifier of the node 10 which is currently serving that mobile terminal 30.

**Figs. 3a****,** **3b** **and** **3c** represent an algorithm executed by a node according to the present invention.

The present algorithm is executed by each processor 200 of the nodes 10a and 10d.

At step S300, the processor 200 detects the reception of a message through the wireless interface 206 or the network interface 204.

At next step S301, the processor 200 checks if the received message is a message transferred by a mobile terminal 30 or else. For that, the processor 200 identifies the interface which received the message. If the message has been received by the wireless interface 206, it means that it has been sent by a mobile terminal 30. If the message has been received by the network interface 204, it means that it has been sent by another node 10 or by the centralizing device 20.

If the received message is a message transferred by a mobile terminal 30, the processor 200 moves to step S302, if the received message is a message transferred by the centralizing device 20 or a node 30, the processor 200 moves to step S320 of the Fig. 3b.

At step S302, the processor 200 checks if the received message is a message representative of a communication establishment session or a cell update message.

If the message is representative of a communication establishment session, the processor 200 moves to step S312. If the message is a cell update message, the processor 200 moves to step S303.

A communication establishment session is sent by a mobile terminal 30 in response to a paging indication previously sent by the node 10 or is sent by a mobile terminal 30 when its user wants to establish a communication with another telecommunication device.

The cell update message is a message sent by the mobile terminal 30 when it executes a cell reselection procedure. The cell update message comprises the identifier of the mobile terminal 30, information identifying the newly selected cell 15 and, according to the present invention, information identifying the previously selected cell 15. The information identifying a cell 15 is the identifier of that cell 15 and/or the identifier of the node 10 which manages that cell 15.

As example, if the mobile terminal 30a sends the cell update message to the node 10b, the cell update message comprises the identifier of the mobile terminal 30a, the identifier of the newly selected cell 15b and information identifying the previously selected cell 15a.

At step S303, the processor 200 checks if a paging routing path already exists in the RAM 203, that contains the identifier of the mobile terminal 30a. If no paging routing path exists in RAM 203, that contains the identifier of the mobile terminal 30a, the processor 200 moves to step S304. Else, it moves to step S309.

At step S304, the processor 200 creates a paging routing path which is associated to the mobile terminal 30. The paging routing path comprises four fields. A first field which comprises the identifier of the mobile terminal 30, a second field which comprises the identifier of the node 10 that controls the previously selected cell 15, a third and a fourth field which are at that time empty.

As example, if the mobile terminal 30a sends the cell update message, the processor 200 of the node 10b creates a paging routing path which is associated to the mobile terminal 30a which comprises, in the first field, the identifier of the mobile terminal 30a and in the second field the identifier of the node 10a which manages the previously selected cell 15a of which the identifier is contained in the cell update message.

It has to be noted here that, if the identifier of the node 10a is not comprised in the cell update message, the processor 200 determines the identifier of the node 10a using the identifier of the cell 15a contained in the cell update message and the mapping between the identifiers of each cell 15 managed by a neighbour node 10 and the identifier of that neighbour node 10.

At next step S305, the processor 200 checks if the second field of the paging routing path which is associated to the mobile terminal 30 comprises an identifier of a node 10.

If there is one identifier of a node 10, the processor 200 moves to step S306. If there is no identifier of a node 10, the processor 200 moves to step S308.

According to above mentioned example, if the mobile terminal 30a sends the cell update message, the processor 200 moves to step S306.

If the mobile terminal 30b is powered on within the cell 15c of the node 15c, the cell update message transferred by the mobile terminal 30b doesn't comprise any information identifying a previously selected cell 15 or any identifier of a node which manages a previously selected cell 15.

The paging routing path associated to the mobile terminal 30b doesn't comprise in the second field any identifier of a node 10. In such case, the processor 200 moves to step S308.

At step S308, the processor 200 commands the transfer of a message to the centralizing device 20 in order to inform it about the fact that it is serving the mobile terminal 30, identified by the identifier of mobile terminal 30 contained in the message received at step S300.

The centralizing device associates the node 10c which sends that message to the mobile terminal 30b, and is ready to send a paging request message containing a paging indication, to the node 10c which sent that message if an incoming call has to be transferred to the mobile terminal 30b.

The processor 200 returns then to step S300 and waits for the reception of a new message.

At step S306, the processor 200 reads the identifier of the node 10 comprised in the second field of the paging routing path and commands the transfer at step S307 of a path update message to the node 10 of which the identifier is comprised in the second field of the paging routing path. The path update message comprises the identifier of the mobile terminal 30 and the identifier of the node 10 which is sending the path update message.

As example, the path update message is sent by the node 10b to the node 10a and comprises the identifier of the mobile terminal 30a and the identifier of the node 10b.

It has to be noted here that, despite the node 10a is no more serving the mobile terminal 30a, the centralizing device 20 is not informed about it. According to the present invention, it is not necessary to inform the centralizing device 20 about that as far as the mobile terminal 30a is in idle mode.

The processor 200 returns then to step S300 and waits for the reception of a new message.

If at step S303, a paging routing path that contains the identifier of the mobile terminal 30a exists in RAM 203, the processor 200 moves from step S303 to step S309.

At step S309, the processor 200 checks if there is an identifier comprised in the third field of the paging routing path of the mobile terminal 30 which sends the message. If there is no identifier comprised in the third field of the paging routing path, the processor 200 returns to step S300. Such case occurs when a node 10 manages at least two cells 15 and the mobile terminal 30 is selecting another cell 15 managed by that node 10. If there is an identifier comprised in the third field of the paging routing path, it means that the list of subsequent nodes which manage respectively the cells selected by the mobile terminal 30 from the last transfer of the information message to the centralizing device contains a loop, the processor 200 moves to step S310.

A loop occurs when the mobile terminal 10 selects the cell 15 managed by a node 10, selects after other cells managed by other nodes and then selects again the cell managed by the node without that the centralizing device 20 receives any message.

At step S310, the processor 200 commands the transfer of a path deletion message of the paging routing path of mobile terminal 30 to the node 10 of which the identifier is comprised in the third field of the paging routing path.

At next step S311, the processor 200 clears the content of the third field of the paging routing path. After that, the processor 200 returns then to step S300 and waits for the reception of a new message.

If at step S302, the processor 200 determines that the received message is a message representative of a communication establishment session, the processor 200 moves to step S312.

At step S312, the processor 200 commands the transfer of a message to the centralizing device 20 in order to inform it about a session initiation procedure and in order to get, if the node 10 doesn't have it, the context of the mobile terminal 30. The centralizing device 20 associates the node 10 which sends that message to the mobile terminal 30 and transfers, if needed the context of the mobile terminal 30.

At next step S313, the processor 200 reads the paging routing path which is associated to the mobile terminal 30 which sent the message. More precisely, the processor 200 reads the first and second fields of that paging routing path.

According to the example, if the mobile terminal 30a sent the message, the read node identifier is the one of the node 10a.

At next step S314, the processor 200 commands the transfer of a path deletion message to the node 10 of which the identifier is comprised in the second field of the paging routing path.

According to the example, if the mobile terminal 30a sent the message, the message is transferred to the node 10a.

At next step S315, the processor 200 updates the paging routing path which is associated to the mobile terminal 30 which sent the message. More precisely, the processor 200 clears the content of the second field of that paging routing path.

After that, the processor 200 returns then to step S300 and waits for the reception of a new message.

If the received message is a message transferred by the centralizing device 20 or a node 30, the processor 200 moves from step S301 to step S320 of the Fig. 3b.

At step S320, the processor 200 checks if the received message is a paging request message. If the message is a paging request message, the processor 200 moves to step S321.

A paging request message contains at least one paging indication which notifies that a remote telecommunication device intends to establish a communication session with a mobile terminal 30 which is supposed to be served by the node 10. A paging indication comprises at least the identifier of a mobile terminal 30.

A mobile terminal 30 is served by a node 10, or in other words, a node 10 serves a mobile terminal 30, if the mobile terminal 30 can establish or receive or continue a communication through the node 10.

At step S321, the processor 200 checks whether or not there is one identifier of a node 10 in the third field of the paging routing path of the mobile terminal 30 of which the identifier is comprised in the received message.

If the third field is empty, the processor 200 moves to step S322. If the third field comprises a node identifier, the processor 200 moves to step S326.

If the third field is empty, it means that the mobile terminal 30 has not selected a cell of another node 10 since the last transfer of a message to the centralised device 20. If the third field is not empty, it means that the mobile terminal 30 has executed a cell reselection procedure and has selected a cell 15 managed by another node 10. The mobile terminal 30 is no more in any cell 15 of the node 10.

At step S322, the processor 200 commands the transfer, through the wireless interface 206 of the paging indication contained in the received paging request message.

According to above mentioned example, if the paging request message is for the mobile terminal 30b, the processor 200 of the node 10c commands the transfer, through the wireless interface 206 of the paging indication contained in the paging request message.

At next step S323, the processor 200 checks if the received message was sent by the centralised device 20 or by a node 10. If the message was sent by the centralised device 20, the processor 200 returns then to step S300 and waits for the reception of a new message. If the message was sent by a node 10, the processor 200 moves to step S324

At next step S324, the processor 200 commands the transfer of a message to the centralizing device 20 in order to inform it that it is serving the mobile terminal 30 and in order to get, if the node 10 doesn't have it, the context of the mobile terminal 30. The centralizing device 20 associates the node 10 which sends that message to the mobile terminal 30 and transfers, if needed, the context of the mobile terminal 30.

At next step S325, the processor 200 clears the content of the second field of the paging routing path. After that, the processor 200 returns then to step S300 and waits for the reception of a new message.

If the third field comprises a node identifier, the processor 200 moves from step S321 to step S326 and commands the transfer, through the network interface 204, of the paging request message to the node 10 of which the identifier is comprised in the third field of the paging routing path.

In one variant of the invention, at step S326, the processor 200 also commands the transfer, through the wireless interface 206 of the paging indication contained in the received paging request message.

According to above mentioned example, if the paging request message is for the mobile terminal 30a, the processor 200 of the node 10a commands the transfer, through the network interface 204, of the paging request message to the node 10b.

At next step S327, the processor 200 deletes the paging routing path of the mobile terminal 30 of which the identifier is comprised in the received message.

According to above mentioned example, the processor 200 of the node 10a deletes the paging routing path of the mobile terminal 30a

After that, the processor 200 returns then to step S300 and waits for the reception of a new message.

If the received message at step S300 is not a paging request message, the processor 200 moves from step S320 to step S330 of the Fig. 3c.

At step S330, the processor 200 checks whether or not the received message is a path deletion message as the one transferred at step S310 of the Fig. 3a.

If the message is a path deletion message, the processor 200 moves to step S331, otherwise the processor 200 moves to step S340.

At step S340, the processor 200 checks whether or not the received message is a confirmation message of a path update message as one sent at step S307.

If the received message is not a confirmation message, the received message is a path update message as the one transferred at step S307 of the Fig. 3a, the processor 200 moves to step S341. If the received message is a confirmation message, the processor 200 moves to step S343.

At step S341, the processor 200 modifies the paging routing path of the mobile terminal 30 of which the identifier is comprised in that path update message. More precisely, the processor 200 inserts the identifier of the node 10 which is comprised in the path update message in the third field of the paging routing path of the mobile terminal 30.

As example, the processor 200 of the node 10a inserts the identifier of the node 10b which is comprised in the path update message in the third field of the paging routing path of the mobile terminal 30a.

At next step S342, the processor 200 commands the transfer through the network interface 204 of a confirmation message to the node 10 of which the identifier was comprised in the received message.

The confirmation message includes the identifier of the mobile terminal 30 contained in the message received at step S300.

In a preferred mode of realisation of the present invention, the confirmation message includes also the value of a variable C contained in the fourth field of the paging routing path. The variable C represents the rank of the node 10 which received the message at step S300 in the list of subsequent nodes 10 which manage the cells selected by the mobile terminal 30 from the last transfer of the information message to the centralizing device 20.

After that, the processor 200 returns then to step S300 and waits for the reception of a new message.

If at step S340, the processor 200 determines that the received message is a confirmation message, the processor moves to step S343.

According to the preferred mode of realisation of the present invention, the confirmation message comprises the value of the variable C.

At step S343, the processor 200 increments the variable C by one and moves to step S344.

At step S344, the processor 200 checks if the variable C is upper than a predetermined value noted N. If the variable C is lower or equal to the value N, the processor 200 inserts the value of C in the fourth field of the paging routing path associated to the identifier of mobile terminal 30 contained in the message received at step S300, then returns to step S300 and waits for the reception of a new message.

If C is upper than a predetermined value noted N, the processor 200 moves to step S345.

At step S345, the processor 200 commands the transfer of a message to the centralizing device 20 in order to inform it that it is serving the mobile terminal 30, identified by the identifier of mobile terminal 30 contained in the message received at step S300. The centralizing device 20 associates the node 10 which sends that message to the mobile terminal 30.

At next step S346, the processor 200 reads the paging routing path which comprises the identifier of the mobile terminal 30 contained in the message received at step S300. More precisely, the processor 200 reads the first and second fields of that paging routing path.

At next step S347, the processor 200 sets the content of the fourth field of the paging routing path which comprises the content of the variable C to null value.

At next step S348, the processor 200 commands the transfer of a path deletion message to the node 10 of which the identifier is comprised in the second field of the paging routing path.

At next step S349, the processor 200 updates the paging routing path which is associated to the mobile terminal 30 which sent the message. More precisely, the processor 200 clears the content of the second field of that paging routing path.

After that, the processor 200 returns then to step S300 and waits for the reception of a new message.

If at step S330, the processor 200 determines that the received message is a path deletion message, the processor 200 moves to step S331.

At step S331, the processor 200 reads the paging routing path which is associated to the identifier of the mobile terminal 30 contained in the message received at step S300. More precisely, the processor 200 reads the first, second and third fields of that paging routing path.

At next step S332, the processor 200 checks if the identifier of the node which sent the message received at step S300 equals the content of the second field of the paging routing path. If the identifier of the node which sent the message received at step S300 equals the content of the second field of the paging routing path, the processor moves to step S333.

At step S333, the processor 200 checks whether or not the third field of the paging routing path of the mobile terminal 30 of which the identifier is comprised in the received message is empty. If there is one identifier of a node 10 in the third field of that paging routing path, the processor 200 moves to step S334.

If at step S333 the third field of the paging routing path of the mobile terminal 30 of which the identifier is comprised in the received message is empty, the processor 200 moves to step S335.

At step S334, the processor 200 commands the transfer of a path deletion message to the node 10 of which the identifier is comprised in the third field of the paging routing path.

At next step S335, the processor 200 deletes the paging routing path of the mobile terminal 30 of which the identifier is comprised in the received message. The processor 200 returns then to step S300 and waits for the reception of a new message.

After that, the processor 200 returns then to step S300 and waits for the reception of a new message.

If at step S332, the identifier of the node 10 which sent the message received at step S300 differs with the content of the second field of the paging routing path, the processor 200 moves to step S336.

At next step S336, the processor 200 checks if the identifier of the node 10 which sent the message received at step S300 equals the content of the third field of the paging routing path. If the identifier of the node 10 which sent the message received at step S300 equals the content of the third field of the paging routing path, the processor 200 moves to step S337.

At step S337, the processor 200 checks whether or not the second field of the paging routing path of the mobile terminal 30 of which the identifier is comprised in the received message is empty. If there is one identifier of a node 10 in the second field of that paging routing path, the processor 200 moves to step S338.

At step S338, the processor 200 commands the transfer of a path deletion message to the node 10 of which the identifier is comprised in the second field of the paging routing path, and moves to step S335 already described.

If at step S337 the second field of the paging routing path of the mobile terminal 30 of which the identifier is comprised in the received message is empty, the processor 200 moves to step S335.

If at step S336, the identifier of the node 10 which sent the message received at step S300 differs with the content of the third field of the paging routing path, returns then to step S300 and waits for the reception of a new message.

It has to be noted here that in a variant of realisation, the processor 200 of each node 10 monitors the time elapsed from the insertion of a node identifier in the third field of the paging routing path of each mobile terminal 30 and deletes a paging routing path when the time duration reaches a predetermined value.

Naturally, many modifications can be made to the embodiments of the invention described above without departing from the scope of the present invention.

## Claims

1. Method for transferring a paging request message for a mobile terminal (30a) of a wireless telecommunication network composed of at least a first node (10a) which has at least managed a cell (15a) selected by the mobile terminal, the first node transferring signals in the cell of the wireless telecommunication network through a wireless interface of the first node, **characterised in that** the method comprises the steps executed by the first node of:
- receiving (S320) a paging request message for the mobile terminal,
- checking (S321) if a paging routing path which is associated to the mobile terminal comprises an identifier of a second node which manages a cell which has at least been selected by the mobile terminal after the cell of the first node, the paging routing path comprising at least the identifier of a node which manages a cell previously selected by the mobile terminal if there is one and may comprise the identifier of a second node which manages a cell which has been selected by the mobile terminal after the cell of the first node,
- transferring(S322) a paging indication in the cell managed by the first node if there is no identifier of the second node in the paging routing path,
- transferring (S326) the paging request message to the second node if there is an identifier of the second node in the paging routing path.

2. Method according to claim 1, **characterised in that** the method comprises further step executed once the paging indication is transferred in the cell of the first node :
- receiving a (S300) message from the mobile terminal,
- transferring (S312) an information message to a centralizing device of the wireless telecommunication network informing the centralizing device that the first node is serving the mobile terminal,
- reading (S313) an identifier of a third node comprised in the paging routing path associated to the mobile terminal, the third node being a node which manages a cell which has been previously selected by the mobile terminal,
- transferring (S314) to the third node a path deletion message,
- deleting (S315) the identifier of the third node from the paging routing path associated to the mobile terminal.

3. Method according to claim 1, **characterised in that** the method comprises further step executed once the paging request message is transferred to the second node of deleting (S327) the paging routing path associated to the mobile terminal.

4. Method according to claim 3, **characterised in that** the paging request message is received by the first node from a third node, the third node being a node which manages a cell which has been previously selected by the mobile terminal, and the method comprises further step executed once the paging indication is transferred in the cell, of transferring an information message to the centralizing device of the wireless telecommunication network informing the centralizing device that the first node is serving the mobile terminal.

5. Method according to the claim 4, **characterised in that** the method comprises further steps of:
- receiving (S330) a path deletion message from the second node,
- deleting (S335) the paging routing path associated to the mobile terminal.

6. Method according to any of the claim 5, **characterised in that** the identifier of the third node is comprised in the paging routing path associated to the mobile terminal and **in that** the method comprises further steps of transferring to the third node the path deletion message.

7. Method according to the claim 6, **characterised in that** when the first node which manages a cell which is selected by the mobile terminal, the method comprises further steps of :
- transferring to the third node a message comprising at least the identifier of the first node,
- receiving a confirmation message from the third node.

8. Method according to claim 7, **characterised in that** the confirmation message comprises an information which is representative of the rank of the third node in the list of subsequent nodes which manage respectively a cell previously selected by the mobile terminal from the last transfer of the information message to the centralizing device.

9. Method according to claim 8, **characterised in that** the method comprises further step of :
- incrementing the information which is representative of the rank of the node,
- checking if the information which is representative of the rank of the node is upper than a predetermined value,
and if the information which is representative of the rank of the node is upper than a predetermined value :
- transferring the information message to the centralizing device of the wireless telecommunication network informing the centralizing device that the first node is serving the mobile terminal,
- setting the information is representative of the rank of the node to another predetermined value,
- transferring the path deletion message to the third node.

10. Method according to any of the claims 1 to 9, **characterised in that** the method comprises further steps of :
- receiving a cell update message from another mobile terminal,
- creating a paging routing path associated to the other mobile terminal,
- transferring an information message to the centralizing device of the wireless telecommunication network informing the centralizing device that the first node is serving the mobile terminal.

11. Method according to claim 10, **characterised in that** the method comprises the steps, executed when the cell update message is received from the other mobile terminal of :
- checking if a paging routing path already exists for the other mobile terminal,
- transferring a path deletion message to the second node if a paging routing path already exists for the other mobile terminal.

12. Method according to any of the claims 1 to 11, **characterised in that** the method comprises further step of transferring the paging request message in the cell managed by the first node if there is an identifier of the second node in the paging routing path.

13. Device for transferring a paging request message for a mobile terminal (30a) of a wireless telecommunication network composed of at least a first node (10a) which has at least managed a cell (15a) selected by the mobile terminal, the first node transferring signals in the cell of the wireless telecommunication network through a wireless interface of the first node, **characterised in that** the device is included in the first node and comprises :
- means for receiving (S320) a paging request message for the mobile terminal,
- means for checking (S321) if a paging routing path which is associated to the mobile terminal comprises an identifier of a second node which manages a cell which has at least been selected by the mobile terminal after the cell managed by the first node, the paging routing path comprising at least the identifier of a node which manages a cell previously selected by the mobile terminal if there is one and may comprise the identifier of a second node which manages a cell which has been selected by the mobile terminal after the cell of the first node,
- means for transferring (S322) a paging indication in the cell managed by the first node if there is no identifier of the second node in the paging routing path,
- means for transferring (S326) the paging request message to the second node if there is an identifier of the second node in the paging routing path.

14. Computer program which can be directly loadable into a programmable device, comprising instructions or portions of code for implementing the steps of the method according to claims 1 to 12, when said computer program is executed on a programmable device.

## Patentansprüche

1. Verfahren zum Transferieren einer Funkrufanforderungsnachricht für ein mobiles Endgerät (30a) eines drahtlosen Telekommunikationsnetzes, das aus wenigstens einem ersten Knoten (10a) aufgebaut ist, der wenigstens eine Zelle (15a) gemanagt hat, die durch das mobile Endgerät ausgewählt ist, wobei der erste Knoten Signale in der Zelle des drahtlosen Telekommunikationsnetzes über eine drahtlose Schnittstelle des ersten Knotens transferiert, **dadurch gekennzeichnet, dass** das Verfahren die folgenden durch den ersten Knoten ausgeführten Schritte aufweist:
- Empfangen (S320) einer Funkrufanforderungsnachricht für das mobile Endgerät,
- Prüfen (S321), ob ein zu dem mobilen Endgerät gehörender Funkrufführungspfad einen Identifizierer eines zweiten Knotens aufweist, der eine Zelle managt, die nach der Zelle des ersten Knotens wenigstens durch das mobile Endgerät ausgewählt worden ist, wobei der Funkrufführungspfad wenigstens den Identifizierer eines Knotens aufweist, der eine Zelle managt, die zuvor durch das mobile Endgerät ausgewählt ist, wenn es eine gibt, und der den Identifizierer eines zweiten Knotens aufweisen kann, der eine Zelle managt, die nach der Zelle des ersten Knotens durch das mobile Endgerät ausgewählt worden ist,
- Transferieren (S322) einer Funkrufanzeige in der durch den ersten Knoten gemanagten Zelle, wenn es keinen Identifizierer des zweiten Knotens in dem Funkrufführungspfad gibt,
- Transferieren (S326) der Funkrufanforderungsnachricht zu dem zweiten Knoten, wenn es einen Identifizierer des zweiten Knotens in dem Funkrufführungspfad gibt.

2. Verfahren nach Anspruch 1, **dadurch gekennzeichnet, dass** das Verfahren weitere Schritte aufweist, die ausgeführt werden, wenn die Funkrufanzeige einmal in der Zelle des ersten Knotens transferiert ist:
- Empfangen (S300) einer Nachricht von dem mobilen Endgerät,
- Transferieren (S312) einer Informationsnachricht zu einer Zentralisierungsvorrichtung des drahtlosen Kommunikationsnetzes, welche Informationsnachricht die Zentralisierungsvorrichtung darüber informiert, dass der erste Knoten das mobile Endgerät bedient,
- Lesen (S313) eines Identifizierers eines dritten Knotens, der in dem zu dem mobilen Endgerät gehörenden Funkrufführungspfad umfasst ist, wobei der dritte Knoten ein Knoten ist, der eine Zelle managt, die zuvor durch das mobile Endgerät ausgewählt worden ist,
- Transferieren (S314) einer Pfadlöschungsnachricht zu dem dritten Knoten,
- Löschen (S315) des Identifizierers des dritten Knotens von dem zu dem mobilen Endgerät gehörenden Funkrufführungspfad.

3. Verfahren nach Anspruch 1, **dadurch gekennzeichnet, dass** das Verfahren einen weiteren Schritt, der ausgeführt wird, wenn die Funkrufanforderungsnachricht einmal in der Zelle des ersten Knotens transferiert ist, eines Löschens (S327) des zu dem mobilen Endgerät gehörenden Funkrufführungspfads aufweist.

4. Verfahren nach Anspruch 3, **dadurch gekennzeichnet, dass** die Funkrufanforderungsnachricht durch den ersten Knoten von einem dritten Knoten empfangen wird, wobei der dritte Knoten ein Knoten ist, der eine Zelle managt, die zuvor durch das mobile Endgerät ausgewählt worden ist, und das Verfahren einen weiteren Schritt, der ausgeführt wird, wenn die Funkrufanzeige einmal in der Zelle des ersten Knotens transferiert ist, eines Transferierens einer Informationsnachricht zu der Zentralisierungsvorrichtung des drahtlosen Kommunikationsnetzes aufweist, welche Informationsnachricht die Zentralisierungsvorrichtung darüber informiert, dass der erste Knoten das mobile Endgerät bedient.

5. Verfahren nach Anspruch 4, **dadurch gekennzeichnet, dass** das Verfahren folgende weitere Schritte aufweist:
- Empfangen (S330) einer Pfadlöschungsnachricht von dem zweiten Knoten,
- Löschen (S335) des zu dem mobilen Endgerät gehörenden Funkrufführungspfads.

6. Verfahren nach Anspruch 5, **dadurch gekennzeichnet, dass** der Identifizierer des dritten Knotens in dem zu dem mobilen Endgerät gehörenden Funkrufführungspfad umfasst ist und dass das Verfahren einen weiteren Schritt eines Transferierens der Pfadlöschungsnachricht zu dem dritten Knoten aufweist.

7. Verfahren nach Anspruch 6, **dadurch gekennzeichnet, dass** dann, wenn der erste Knoten, der eine Zelle managt, die durch das mobile Endgerät ausgewählt ist, das Verfahren folgende weitere Schritte aufweist:
- Transferieren einer Nachricht, die wenigstens den Identifizierer des ersten Knotens aufweist, zu dem dritten Knoten,
- Empfangen einer Bestätigungsnachricht von dem dritten Knoten.

8. Verfahren nach Anspruch 7, **dadurch gekennzeichnet, dass** die Bestätigungsnachricht eine Information aufweist, die den Rang des dritten Knotens in der Liste aufeinanderfolgender Knoten darstellt, die jeweils eine Zelle managen, die seit dem letzten Transfer der Informationsnachricht zu der Zentralisierungsvorrichtung zuvor durch das mobile Endgerät ausgewählt ist.

9. Verfahren nach Anspruch 8, **dadurch gekennzeichnet, dass** das Verfahren folgende weitere Schritte aufweist:
- Inkrementieren der Information, die den Rang des Knotens darstellt,
- Prüfen, ob die Information, die den Rang des Knotens darstellt, höher als ein vorbestimmter Wert ist,
und wenn die Information, die den Rang des Knotens darstellt, höher als ein vorbestimmter Wert ist:
- Transferieren der Informationsnachricht zu der Zentralisierungsvorrichtung des drahtlosen Telekommunikationsnetzes, welche Informationsnachricht die Zentralisierungsvorrichtung darüber informiert, dass der erste Knoten das mobile Endgerät bedient,
- Einstellen der Information, die den Rang des Knotens darstellt, auf einen anderen vorbestimmten Wert,
- Transferieren der Pfadlöschungsnachricht zu dem dritten Knoten.

10. Verfahren nach einem der Ansprüche 1 bis 9, **dadurch gekennzeichnet, dass** das Verfahren folgende weitere Schritte aufweist:
- Empfangen einer Zellenaktualisierungsnachricht von einem anderen mobilen Endgerät,
- Erzeugen eines zu dem anderen mobilen Endgerät gehörenden Funkrufführungspfads,
- Transferieren einer Informationsnachricht zu der Zentralisierungsvorrichtung des drahtlosen Telekommunikationsnetzes, welche Informationsnachricht die Zenfralisierungsvorrichtung darüber informiert, dass der erste Knoten das mobile Endgerät bedient.

11. Verfahren nach Anspruch 10, **dadurch gekennzeichnet, dass** das Verfahren die folgenden Schritte, die ausgeführt werden, wenn die Zellenaktualisierungsnachricht von dem anderen mobilen Endgerät empfangen wird, aufweist:
- Prüfen, ob bereits ein Funkrufführungspfad für das andere mobile Endgerät existiert,
- Transferieren einer Pfadlöschungsnachricht zu dem zweiten Knoten, wenn bereits ein Funkrufführungspfad für das andere mobile Endgerät existiert.

12. Verfahren nach einem der Ansprüche 1 bis 11, **dadurch gekennzeichnet, dass** das Verfahren einen weiteren Schritt eines Transferierens der Funkrufanforderungsnachricht in der Zelle aufweist, die durch den ersten Knoten gemanagt wird, wenn es einen Identifizierer des zweiten Knotens in dem Funkrufführungspfad gibt.

13. Vorrichtung zum Transferieren einer Funkrufanforderungsnachricht für ein mobiles Endgerät (30a) eines drahtlosen Telekommunikationsnetzes, das aus wenigstens einem ersten Knoten (10a) aufgebaut ist, der wenigstens eine Zelle (15a) gemanagt hat, die durch das mobile Endgerät ausgewählt ist, wobei der erste Knoten Signale in der Zelle des drahtlosen Telekommunikationsnetzes über eine drahtlose Schnittstelle des ersten Knotens transferiert, **dadurch gekennzeichnet, dass** die Vorrichtung in dem ersten Knoten enthalten ist und folgendes aufweist:
- eine Einrichtung zum Empfangen (S320) einer Funkrufanforderungsnachricht für das mobile Endgerät,
- eine Einrichtung zum Prüfen (S321), ob ein zu dem mobilen Endgerät gehörender Funkrufführungspfad einen Identifizierer eines zweiten Knotens aufweist, der eine Zelle managt, die nach der durch den ersten Knoten gemanagte Zelle wenigstens durch das mobile Endgerät ausgewählt worden ist, wobei der Funkrufführungspfad wenigstens den Identifizierer eines Knotens aufweist, der eine Zelle managt, die zuvor durch das mobile Endgerät ausgewählt ist, wenn es eine gibt, und der den Identifizierer eines zweiten Knotens aufweisen kann, der eine Zelle managt, die nach der Zelle des ersten Knotens durch das mobile Endgerät ausgewählt worden ist,
- eine Einrichtung zum Transferieren (S322) einer Funkrufanzeige in der durch den ersten Knoten gemanagten Zelle, wenn es keinen Identifizierer des zweiten Knotens in dem Funkrufführungspfad gibt,
- eine Einrichtung zum Transferieren (S326) der Funkrufanforderungsnachricht zu dem zweiten Knoten, wenn es einen Identifizierer des zweiten Knotens in dem Funkrufführungspfad gibt.

14. Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 12, wenn das Computerprogramm auf einer programmierbaren Vorrichtung ausgeführt wird.

## Revendications

1. Méthode pour transférer un message de demande de pagination pour un terminal mobile (30a) d'un réseau de télécommunication sans fil composé au moins d'un premier noeud (10a) qui contrôle au moins une cellule (15a) choisie par le terminal mobile, le premier noeud transférant des signaux dans la cellule du réseau de télécommunication sans fil par une interface sans fil du premier noeud, **caractérisée en ce que** la méthode comporte les étapes exécutées par le premier noeud de :
- réception (S320) d'un message de demande de pagination pour le terminal mobile,
- vérification (S321) si un chemin de routage de pagination qui est associé au terminal mobile comporte un identifiant d'un deuxième noeud qui contrôle une cellule qui a été au moins choisie par le terminal mobile après la cellule du premier noeud, le chemin de routage de pagination comportant au moins l'identifiant d'un noeud qui contrôle une cellule précédemment choisie par le terminal mobile s'il y en a un et peut comporter l'identifiant d'un deuxième noeud qui contrôle une cellule qui a été choisie par le terminal mobile après la cellule du premier noeud,
- transfert (S322) d'une indication de pagination dans la cellule contrôlée par le premier noeud s'il n'y a aucun identifiant du deuxième noeud dans le chemin de routage de pagination,
- transfert (S326) du message de demande de pagination au deuxième noeud s'il y a un identifiant du deuxième noeud dans le chemin de routage de pagination.

2. Méthode selon la revendication 1, **caractérisée en ce que** la méthode comporte en outre les étapes exécutées une fois que l'indication de pagination est transférée dans la cellule du premier noeud de:
- réception d'un message du (S300) terminal mobile,
- transfert (S312) d'un message d'information à un dispositif de centralisation du réseau de télécommunication sans fil informant le dispositif de centralisation que le premier noeud sert le terminal mobile,
- lecture (S313) d'un identifiant d'un troisième noeud compris dans le chemin de routage de pagination associé au terminal mobile, le troisième noeud étant un noeud qui contrôle une cellule qui a été précédemment choisie par le terminal mobile,
- transfert (S314) au troisième noeud d'un message de suppression de chemin,
- suppression (S315) de l'identifiant du troisième noeud du chemin de routage de pagination associé au terminal mobile.

3. Méthode selon la revendication 1, **caractérisée en ce que** la méthode comporte en outre l'étape exécutée une fois que le message de demande de pagination est transféré au deuxième noeud de suppression (S327) du chemin de routage de pagination associé au terminal mobile.

4. Méthode selon la revendication 3, **caractérisée en ce que** le message de demande de pagination est reçu par le premier noeud d'un troisième noeud, le troisième noeud étant un noeud qui contrôle une cellule qui a été précédemment choisie par le terminal mobile, et la méthode comporte en outre l'étape exécutée une fois que l'indication de pagination est transférée dans la cellule, de transfert d'un message d'information au dispositif de centralisation du réseau de télécommunication sans fil informant le dispositif de centralisation que le premier noeud sert le terminal mobile.

5. Méthode selon la revendication 4, **caractérisée en ce que** la méthode comporte en outre les étapes de :
- réception (S330) d'un message de suppression de chemin du deuxième noeud,
- suppression (S335) du chemin de routage de pagination associé au terminal mobile.

6. Méthode selon la revendication 5, **caractérisée en ce que** l'identifiant du troisième noeud est compris dans le chemin de routage de pagination associé au terminal mobile et **en ce que** la méthode comporte en outre l'étape de transfert au troisième noeud du message de suppression de chemin.

7. Méthode selon la revendication 6, **caractérisée en ce que** lorsque le premier noeud qui contrôle une cellule qui est choisie par le terminal mobile, la méthode comporte en outre les étapes de :
- transfert au troisième noeud d'un message comportant au moins l'identifiant du premier noeud,
- réception d'un message de confirmation du troisième noeud.

8. Méthode selon la revendication 7, **caractérisée en ce que** le message de confirmation comporte une information représentative du rang du troisième noeud dans la liste des noeuds suivants qui contrôlent respectivement une cellule précédemment choisie par le terminal mobile à partir du dernier transfert du message d'information au dispositif de centralisation.

9. Méthode selon la revendication 8, **caractérisée en ce que** la méthode comporte en outre les étapes de :
- incrémentation de l'information représentative du rang du noeud,
- vérification si l'information représentative du rang du noeud est supérieure à une valeur prédéterminée,
et si l'information représentative du rang du noeud est supérieure à une valeur prédéterminée :
- transfert du message d'information au dispositif de centralisation du réseau de télécommunication sans fil informant le dispositif de centralisation que le premier noeud sert le terminal mobile,
- mise de l'information représentative du rang du noeud à une autre valeur prédéterminée,
- transfert du message de suppression de chemin au troisième noeud.

10. Méthode selon l'une des revendications 1 à 9, **caractérisée en ce que** la méthode comporte en outre les étapes de :
- réception d'un message de mise à jour de cellules d'un autre terminal mobile,
- création d'un chemin de routage de pagination associé à l'autre terminal mobile,
- transfert d'un message d'information au dispositif de centralisation du réseau de télécommunication sans fil informant le dispositif de centralisation que le premier noeud sert le terminal mobile.

11. Méthode selon la revendication 10, **caractérisée en ce que** la méthode comporte les étapes exécutées lorsque le message de mise à jour de cellules est reçu de l'autre terminal mobile de:
- vérification si un chemin de routage de pagination existe déjà pour l'autre terminal mobile,
- transfert d'un message de suppression de chemin au deuxième noeud si un chemin de routage de pagination existe déjà pour l'autre terminal mobile.

12. Méthode selon l'une des revendications 1 à 11, **caractérisée en ce que** la méthode comporte en outre l'étape de transfert du message de demande de pagination dans la cellule contrôlée par le premier noeud s'il y a un identifiant du deuxième noeud dans le chemin de routage de pagination.

13. Dispositif pour transférer un message de demande de pagination pour un terminal mobile (30a) d'un réseau de télécommunication sans fil composé au moins d'un premier noeud (10a) qui contrôle au moins une cellule (15a) choisie par le terminal mobile, le premier noeud transférant des signaux dans la cellule du réseau de télécommunication sans fil par une interface sans fil du premier noeud, **caractérisé en ce que** le dispositif est inclus dans le premier noeud et comporte :
- des moyens de réception (S320) d'un message de demande de pagination pour le terminal mobile,
- des moyens de vérification (S321) si un chemin de routage de pagination qui est associé au terminal mobile comporte un identifiant d'un deuxième noeud qui contrôle une cellule qui a été au moins choisie par le terminal mobile après la cellule du premier noeud, le chemin de routage de pagination comportant au moins l'identifiant d'un noeud qui contrôle une cellule précédemment choisie par le terminal mobile s'il y en a un et peut comporter l'identifiant d'un deuxième noeud qui contrôle une cellule qui a été choisie par le terminal mobile après la cellule du premier noeud,
- des moyens de transfert (S322) d'une indication de pagination dans la cellule contrôlée par le premier noeud s'il n'y a aucun identifiant du deuxième noeud dans le chemin de routage de pagination,
- des moyens de transfert (S326) du message de demande de pagination au deuxième noeud s'il y a un identifiant du deuxième noeud dans le chemin de routage de pagination.

14. Programme informatique qui peut être directement chargeable dans un dispositif programmable, comportant des instructions ou des parties du code pour mettre en application les étapes de la méthode selon les revendications 1 à 12, quand ledit programme informatique est exécuté sur un dispositif programmable.
